# EUROPÄISCHE PATENTANMELDUNG

(11) **EP 2 562 306 A1**
(43) Veröffentlichungstag der Anmeldung: **27.02.2013**
(21) Anmeldenummer: 11401580.3
(22) Anmeldetag: 24.08.2011
(51) Int. Cl.: D06F 58/24, D06F 58/26

(54) **Wäschetrockner mit Kondensationseinrichtung**

(71) Anmelder: Miele & Cie. KG, 33332 Gütersloh (DE)
(72) Erfinder: Jording, Wolfhard, 32584 Löhne (DE); Kramme, Jörg, 33415 Verl (DE); Schimke, Patrick, 33330 Gütersloh (DE); Siepmann, Stefan, 33775 Versmold (DE); Vartmann, Thomas, 48361 Beelen (DE)

(57) **Zusammenfassung**

Die Erfindung betrifft einen Wäschetrockner (1), umfassend eine in einem Gehäuse (2) angeordnete, mittels eines Motors (10) antreibbare, über eine horizontale oder geneigten Achse drehbar gelagerte Trommel (3), einen Prozessluftkanal (8) mit einem Wärmetauscher (15) und einem Heizkörper (16) zur Bereitstellung eines geschlossenen Prozessluftkreislaufs (PL), in dem mittels eines Prozessluftgebläses (9) Trocknungsluft über einen Lufteinlass (6) der Trommel (3) zugeführt, über einen Luftauslass (7) aus dieser abgeführt, in dem Wärmetauscher (15) gekühlt und entfeuchtet und danach durch eine Heizung (16) wieder erwärmt werden kann, und eine Steuereinrichtung (11) zum Steuern des Prozessluftgebläses (9), des Heizkörpers (16) und des Antriebsmotors (10) der Trommel (3) zur Durchführung eines Trocknungsvorganges.

Um weitere Energiespareffekte zu nutzen, umfasst der Wärmetauscher (15) ein Leitungssystem (20) zum Durchleiten von Wasser zum Ableiten von Wärme aus dem Wärmetauscher (15).

## Beschreibung

Die Erfindung betrifft einen Wäschetrockner, umfassend eine in einem Gehäuse angeordnete, mittels eines Motors antreibbare, über eine horizontale oder geneigten Achse drehbar gelagerte Trommel, einen Prozessluftkanal mit einem Wärmetauscher und einem Heizkörper zur Bereitstellung eines geschlossenen Prozessluftkreislaufs, in dem mittels eines Prozessluftgebläses Trocknungsluft über einen Lufteinlass der Trommel zugeführt, über einen Luftauslass aus dieser abgeführt, in dem Wärmetauscher gekühlt und entfeuchtet und danach durch eine Heizung wieder erwärmt werden kann, und eine Steuereinrichtung zum Steuern des Prozessluftgebläses, des Heizkörpers und des Antriebsmotors der Trommel zur Durchführung eines Trocknungsvorganges.

Aus dem Stand der Technik ist gemäß der US 4,514, 914 ein Wäschetrockner bekannt, bei dem die Prozessluft mittels einer Wasserheizung beheizt wird. Dieser Wäschetrockner ist als Ablufttrockner ausgebildet, bei dem die warme und feuchte Prozessluft nach außen abgelassen wird. Hierbei ist es nachteilig, dass eine Entlüftung für den Aufstellraum des Trockners vorgesehen werden muss. Ferner ist der Wärmeverlust aufgrund des Herausblasens aus dem Gerät recht hoch.

Andere Trockner sind als Kondensationstrockner mit einem geschlossenen Prozessluftkreislauf versehen, die bei einer rein luftgekühlten Ausführung ebenfalls recht viel Energie verbrauchen.

Eine andere Möglichkeit ist aus der DE 44 22 191 A1 bekannt, bei der für die Bereitstellung der Heizung und des Wärmetauschers zum Entfeuchten der Prozessluft eine Wärmepumpe verwendet wird. Dies wird zurzeit zwar als sehr energieeffizient angesehen, jedoch ist der konstruktive Aufwand des Wärmepumpenkreises nicht zu unterschätzen. Ferner besteht auch hierbei der Wunsch, die Effektivität bzw. den Energieverbrauch weiter zu vermindern.

Der Erfindung stellt sich somit die Aufgabe, einen möglichst einfachen und energiesparenden Wäschetrockner bereitzustellen.

Erfindungsgemäß wird diese Aufgabe durch einen Wäschetrockner mit den Merkmalen des unabhängigen Anspruchs 1 und durch ein System mit den Merkmalen des Anspruchs 14 oder 16 gelöst. Vorteilhafte Ausgestaltungen und Weiterbildungen der Erfindung ergeben sich aus den jeweils nachfolgenden abhängigen Ansprüchen.

Der mit der Erfindung erreichte Vorteil besteht darin, dass ein besonders energiesparender Kondensationstrockner bereitgestellt wird. Hierbei wird eine ohnehin vorhandenen Heizanlage der Hausinstallation in der Weise genutzt, dass sowohl die Wärme für den Trockner als auch die Zuführung von kaltem Medium zur Bereitstellung des Kondensationseffektes von einem Wärmespeicher, der als Warmwasserspeicher ausgebildet ist, der Heizungsanlage bereitgestellt wird. Dadurch wird der Trockner in die Hausinstallation mit integriert, sodass alle bereits vorhandenen Maßnahmen zur Energieeinsparung, wie Solarbeheizung des Wassers für den Wärmespeicher, mit genutzt werden. Gemäß der Erfindung umfasst der Wärmetauscher ein Leitungssystem zum Durchleiten von Wasser zum Ableiten von Wärme aus dem Wärmetauscher.

In einer vorteilhaften Weiterbildung umfasst der Heizkörper ein Leitungssystem zum Durchleiten von Wasser und zum Zuführen von Wärme in den Heizkörper. Dadurch wird mit Hilfe des Wärmetauschers ein Wasserkreislauf für warmes Wasser aus dem Wärmespeicher bereitgestellt. Eine gute Wärmezuführung und damit eine zuverlässige Erwärmung der Prozessluft für die gewünschte Trocknungsphase sind somit sichergestellt.

In einer vorteilhaften Ausführung umfasst der Wäschetrockner ein Ventilsystem, das ein Ventil in einer Zuführungsleitung zum Zuführen des kalten Wassers zum Wärmetauscher und ein Ventil in einer Zuführungsleitung zum Zuführen des warmen Wassers zum Heizkörper. Die Ventile werden hierbei mittels der Steuereinrichtung des Wäschetrockners gezielt in Abhängigkeit des Wärmebedarfs und des Kältebedarfs sowie in Abhängigkeit der vorhandenen Temperaturen im Kreislauf des warmen Wassers und im Kreislauf des kalten Wassers geöffnet oder geschlossen. Der Trocknungsprozess kann so auf das vorhandene Temperaturniveau des Wassers im Wärmespeicher angepasst werden.

Um die Wärme gezielt abzuführen, ist es vorteilhaft, einen als Wärmetauscher ausgebildeten Wasserkühler zum Kühlen des zum Wärmetauscher zugeführten Wassers in das Leitungssystem für das kalte Wasser vorzusehen. Hierbei kann das kältere Wasser aus dem Wärmespeicher nochmal etwas herunter gekühlt werden, um die Abkühlung der Prozessluft zur und Kondensation zu verstärken.

In einer vorteilhaften Weiterbildung ist der Wasserkühler als Bypass zwischen der Zuführungsleitung zum Wärmetauscher und der Abführungsleitung vom Wärmetauscher zum Kühlen und Entfeuchten der Prozessluft angeordnet, und mittels einer weiteren Ventilvorrichtung aktivierbar. Dadurch kann die zusätzliche Kühlung bedarfsgemäß aktiviert werden, beispielsweise nur dann, wenn das kältere Wasser im Wärmespeicher für eine Kühlung der Prozessluft nicht kalt genug ist.

In einer zweckmäßigen Weiterbildung ist ein Kühlluftgebläse zur Wärmeabführung des Wasserkühlers im Trockner angeordnet, um die Abkühlung des kälteren Wassers nochmals zu verstärken.

In einer insgesamt zweckmäßigen Ausführung ist im Leitungssystem des Wärmetauschers eine Pumpe zur Bereitstellung des Wasserdurchflusses durch den Wärmetauscher angeordnet. Im Leitungssystem des Heizkörpers ist ebenfalls eine eigene Pumpe zur Bereitstellung des Wasserdurchflusses durch den Heizkörper angeordnet. Die Pumpen werden von der Steuereinrichtung angesteuert, sodass die Strömungsgeschwindigkeit des kalten Wassers durch den Wärmetauscher und die Strömungsgeschwindigkeit des warmen Wassers durch den Heizkörper in Abhängigkeit der Temperaturgegebenheiten im Wärmespeicher und des Trocknungsprogramms eingestellt werden können.

In einer vorteilhaften Weiterbildung umfasst der Trockner einen Temperatursensor im Leitungssystem des Wärmetauschers zur Regelung der Pumpe. Damit kann der Wasserdurchfluss und damit die Abkühlung der Prozessluft im Trocknungsprozess individuell geregelt werden. In einer weiteren, vorteilhaften Ausführung umfasst der Trockner einen Temperatursensor im Leitungssystem des Heizkörpers zur Regelung der Pumpe. Damit kann der Wasserdurchfluss und damit die Erwärmung der Prozessluft im Trocknungsprozess individuell geregelt werden. Die Sensoren werden entsprechend von der Steuereinrichtung des Trockners ausgewertet.

Insgesamt ist es zweckmäßig, für den Wäschetrockner ein Hydraulikmodul vorzusehen, in dem das Ventilsystem, der Wasserkühler und die Pumpen als Einheit zusammengefasst sind. Das Hydraulikmodul kann dabei im Trocknergehäuse integriert sein oder mit einem separaten Gehäuse ausgebildet sein. Hierbei hat sich die Ausbildung als bodenseitiges Hydraulikmodul bzw. als Unterbau als vorteilhaft erwiesen. Das Modul kann auch für eine seitliche Anbringung am Trocknergehäuse, beispielsweise in der Art eines Rucksacks, vorgesehen werden.

In einer vorteilhaften Weiterbildung besitzt das Hydraulikmodul oder der Wäschetrockner Anschlüsse zum Verbinden der Zuführungsleitungen und der Abführungsleitungen an einen Wärmespeicher in einer Heizungsinstallation oder Warmwasserinstallation. Somit ist ein einfacher Anschluss des Wäschetrockners in das System des Wärmespeichers ohne aufwändige Installationsarbeiten gewährleistet.

Wie bereits oben ausgeführt, ist die Steuerungseinrichtung des Trockners dazu ausgebildet, das Ventilsystem, die Ventilvorrichtung für den Wasserkühler, die Pumpen und/oder das Kühlluftgebläse zu steuern.

Die Erfindung betrifft ferner ein System, umfassend
- einen als Wasserspeicher ausgebildeten Wärmespeicher, in dem Wasser erwärmt werden kann, derart, dass sich darin ein Schichtsystem unterschiedlicher Temperaturen ausbildet, wobei das Wasser in einer der oberen Schichten eine höhere Temperatur aufweist, als das Wasser in einer der unteren Schichten, bezogen auf die betriebsgemäße Aufstellposition des Wasserspeichers,
- ein Wäschetrockner wie oben beschrieben, wobei das Leitungssytem für den Wärmetauscher an den Wasserspeicher im unteren Bereich angeschlossen ist.

In einer zweckmäßigen Ausführung ist das Leitungssytem für den Heizkörper an den Wasserspeicher im oberen Bereich angeschlossen, bezogen auf die betriebsgemäße Aufstellposition des Wasserspeichers.

In einer weiteren Ausführung umfasst das System
- eine Wärmequelle, die zum Erwärmen von Wasser ausgebildet ist,
- eine gegenüber der Wärmequelle separate Kältequelle,
- ein Wäschetrockner wie vorstehend beschrieben, wobei das Leitungssystem für den Heizkörper an die Wärmequelle angeschlossen ist und das Leitungssystem für den Wärmetauscher an die Kältequelle angeschlossen ist. Als Wärmequelle kann hierbei die normale Heizung dienen, mit oder ohne Speicherbehälter, wie vorstehend beschrieben. Als Kältequelle kann hier beispielsweise die Pumpanlage eines Schwimmbades dienen, in der das Wasser in der Regel kälter ist, als das Wasser einer Hausheizungsanlage. Andere Kältequellen aus Lüftungs- oder Klimaanlagen, Frostanlagen sind mit entsprechenden Anpassungen auch nutzbar.

Ein Ausführungsbeispiel der Erfindung ist in den Zeichnungen rein schematisch dargestellt und wird nachfolgend näher beschrieben. Es zeigt:
- Fig. 1:: eine perspektivische Darstellung eines Wäschetrockners und
- Fig. 2:: eine schematische Darstellung der Komponenten des Trockners und des Systems.

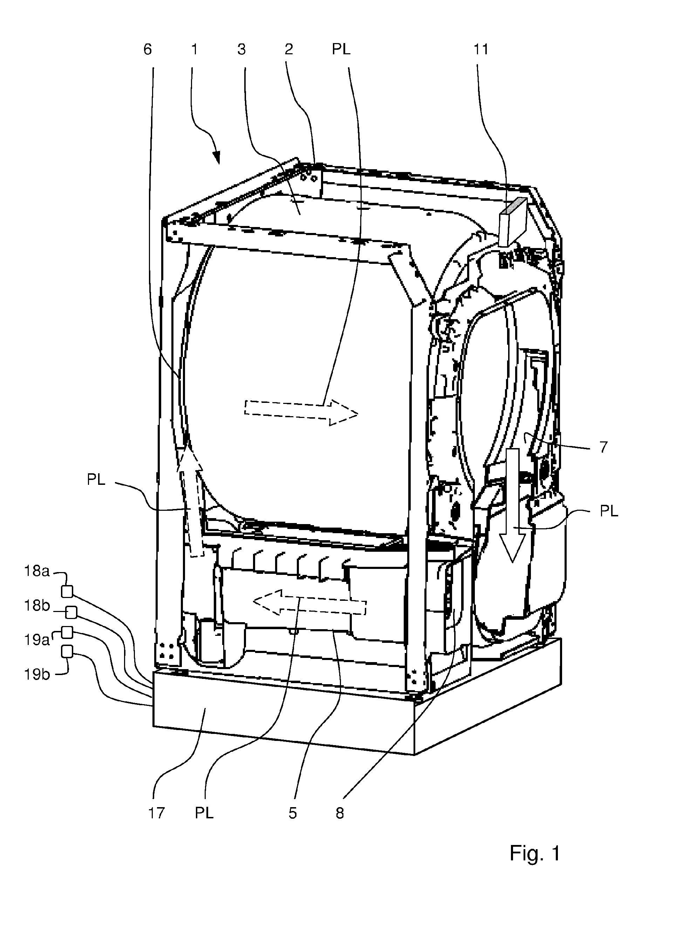

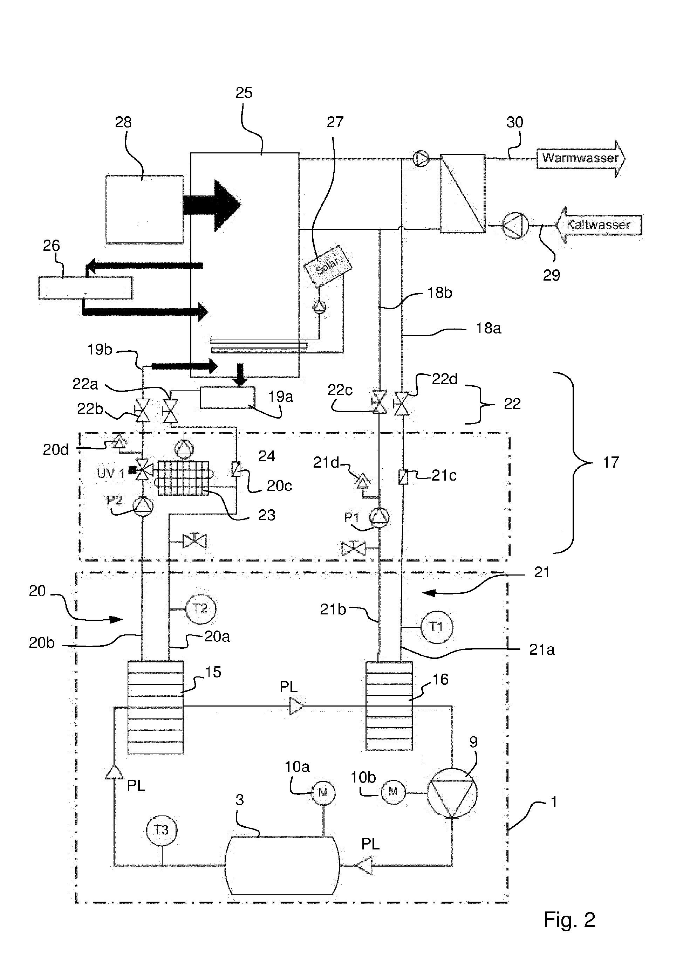

Die Fig. 1 zeigt in der Perspektive einen Wäschetrockner 1. Der Wäschetrockner 1 umfasst hierbei ein Gehäuse 2 in dem eine drehbar gelagerte Trommel 3 angeordnet ist. In dem Gehäuse 2 befindet sich bodenseitig unterhalb der Trommel 3, bezogen auf die betriebsgemäße Aufstellposition des Trockners 1, das Funktionsmodul 5, das die Komponenten für die Bereitstellung der Prozessluft PL und den Antrieb der Trommel 3 aufnimmt. Im Funktionsmodul 5 wird die Prozessluft PL mittels eines Gebläses 9 (Fig. 2) erzeugt und zum Lufteinlass 6 der Trommel 3 zugeführt. Durch den Luftauslass 7 gelangt die Trocknungsluft PL aus der Trommel 3 in das Bodenmodul 5, in dem in einem Kanal 8 der Wärmetauscher 15 (Fig. 2) zur Abkühlung und Kondensation der Prozessluft PL und der Heizkörper 16 (Fig. 2) zum Erwärmen der Prozessluft PL angeordnet sind.

Fig. 2 zeigt schematisch den Trockner 1 mit dem Kreislauf der Prozessluft PL und den Komponenten zur Erzeugung der Prozessluft PL. Hier ist in einem Kanal 8 der Wärmetauscher 15 und der Heizkörper 16 angeordnet, die Bestandteile des Hydrauliksystems sind. Das Leitungssystem 20 dient zur Verbindung des Wärmetauschers 15 mit einer externen Kältequelle, hier ein Wärmespeicher 25 als Wasserspeicher einer Heizungsanlage in einer Hausinstallation. Der Luftauslass 7 nimmt die feuchte, aufgebrauchte Prozessluft PL auf, wobei das Gebläse 9 die Strömung der Prozessluft PL bereitstellt. Ein Motor 10b treibt das Gebläse 9 an. Ein Motor 10a stellt die Drehbewegung der Trommel 3 mittels eines Trommelantriebs bereit. Der Trommelantrieb und das Gebläse können auch mit einem einzigen Motor angetrieben werden.

In Fig. 2 ist ferner zu erkennen, dass die feuchte Prozessluft PL in einem Wärmetauscher 15 entfeuchtet und danach durch eine Heizung 16 wieder erwärmt wird. Der Wärmetauscher 15 ist mittels eines Leitungssystems 20 über einen Kaltwassereingang 19a an den unteren Bereich des Wärmespeichers 25 angeschlossen. Der Kaltwasserausgang 19b des Wärmetauschers mündet im unteren Bereich des Wasserspeichers 25, wobei die Anschlüsse an den Wasserspeicher 25 etwas beabstandet angeordnet sind. Mittels der Pumpe P2 im Leitungssystem 20 in der Ausgangsleitung 19b wird eine Strömung oder Zirkulation des kalten Wassers zwischen dem Wärmetauscher 15 und dem Wasserspeicher 25 bereitgestellt. Mittels des Ventils 22a wird der Wasserzulauf zum Wärmetauscher 15 aktiviert oder deaktiviert, mittels des Ventils 22b entsprechend der Wasserablauf aus dem Wärmetauscher 15 zum Wärmespeicher 25. Ein zusätzlicher, als Wärmetauscher ausgebildeter Wasserkühler 23 dient zur bedarfsweisen, zusätzlichen Abkühlung des kalten Wassers für den Wärmetauscher 15. Das Gebläse 24 beaufschlagt den Wasserkühler 23 mit Kühlluft, sodass die Wärme vom Kühler 23 heraus befördert wird. Mit der Ventilanordnung UV1 wird der Wasserdurchlass zum Kühler 23 aktiviert oder deaktiviert, je nach Kühlbedarf für das kalte Wasser für den Wärmetauscher 15.

Dem Wärmetauscher 15 ist im Prozessluftkanal 8 ein Heizkörper 16 nachgeschaltet, der als Wärmetauscher zur Prozesslufterwärmung ausgeführt ist und mit warmem Wasser durchströmt wird. Der Warmwassereingang 18a ist hierbei an der Warmwasserausgangsleitung 30 für den Wärmespeicher 25 oder am oberen Bereich des Wärmespeichers 25 angeschlossen. Der Warmwasserausgang 18b des Heizkörpers 16 ist etwas beabstandet an den oberen Bereich des Speicherbehälters 25 bzw. an der Kaltwasserzulaufleitung 29 zum Wärmespeicher 25 angeschlossen. Mittels des Ventils 22c wird der Warmwasserzulauf zum Heizkörper 16 aktiviert oder deaktiviert, mittels des Ventils 22d entsprechend der Warmwasserablauf aus dem Heizkörper 16 zum Wärmespeicher 25. Die Pumpe P1 im Leitungssystem 21 des Heizkörpers 16 dient zur Bereitstellung einer Strömung oder Zirkulation des warmen Wassers durch den Heizkörper 16. Rückschlagklappen 21 c und 20c sowie Entlüftungsventile 20d und 21 d sind ebenfalls in den Leitungssystemen 20 und 21 vorhanden.

Zwischen den Leitungen des Wärmespeicher 25 und den Anschlüssen 18a, 18b, 19a, 19b am Hydraulikmodul 17 können Absperrhähne vorgesehen sein, mit denen die Leitungen entsprechend von Hand verschlossen werden können. Der Speicherbehälter 25 braucht dann nicht entleert werden, wenn der Trockner 1 mit dem Hydraulikmodul 17 vom Speicherbehälter 25 entfernt oder angeschlossen wird, was im Wartungsfall vorkommen kann.

Die Komponenten für die Kaltwasserbereitstellung für den Wärmetauscher 15 und für die Warmwasserbereitstellung für den Heizkörper 16 sind in einem Hydraulikmodul 17 als kompakte Einheit zusammengefasst. In der Ausführung gemäß Fig. 1 ist zu erkennen, dass das Hydraulikmodul ein separates Gehäuse umfasst und als bodenseitiger Sockel für den Kondensations-Trockner 1 ausgebildet ist. Die Anschlüsse 18a, 18b, 19a, 19b sind entsprechend als Kupplungsteile ausgebildet, die einen einfachen und schnellen Anschluss an die Hausinstallation bereitstellen.

Gemäß Fig. 2 ist ferner skizziert, dass das Wasser im Wärmespeicher 25 mittels einer Solaranlage 27 beheizt wird. Ferner kann zusätzlich oder für sich allein eine Beheizung auf konventionellem Wege mittels eines Verbrennungsofens 28 erfolgen. Eine Zentralheizung 26 kann ebenfalls an den Wasserspeicher 26 angeschlossen sein.

Mit dem erfindungsgemäßen Trockner 1 kann auch überschüssige Abwärme in das Heizsystem / Trinkwasserspeicher 25 abgegeben werden. Dies ist in unterschiedlichen Ausführungen denkbar. Besonders vorteilhaft ist die Regelung der Temperatur des Wärmetauschers 15 oder des Heizkörpers 16 mittels einer Drehzahlregelung der Pumpen P1 und P2, da dann der Wasserkühler 23 entfallen könnte und der Trockner 1 mit einem schalldichten Gehäuse ausgeführt werden kann. Die Temperatur für diese Regelung wird für das kalte Wasser im Leitungssystem 20 mittels eines Temperatursensors T2 erfasst. Für die Regelung der Pumpe für das warme Wasser für den Heizkörper 16 wird ein der Temperatursensor T1 im Leitungssystem 21 verwendet.

Insgesamt macht sich der erfindungsgemäße Trockner 1 die Eigenschaft zunutze, dass in der bestehenden Haustechnik eine Vielzahl von Kälte - und Wärmequellen vorhanden sind. Vielfach werden bereits regenerative Quellen (Sonne, Erdreich, Biomasse, Luft) genutzt. Durch Nutzung dieser Quellen kann die Ökobilanz verbessert werden, sowie je nach System für den Anwender deutlich günstiger getrocknet werden.

Insbesondere für Solarthermie und BHKWs als Wärmequelle ergeben sich im Sommer Synergieeffekte, da diese Systeme dann deutlich mehr Wärme liefern als für die reine Trinkwasserbereitung benötigt wird. Das Gleiche gilt für eine Soleleitung einer Wärmepumpe bzw. einen Eisspeicher als Kältespeicher, da hier Wärme für die Heizsaison gespeichert werden kann.

## Patentansprüche

1. Wäschetrockner (1), umfassend eine in einem Gehäuse (2) angeordnete, mittels eines Motors (10) antreibbare, über eine horizontale oder geneigten Achse drehbar gelagerte Trommel (3), einen Prozessluftkanal (8) mit einem Wärmetauscher (15) und einem Heizkörper (16) zur Bereitstellung eines geschlossenen Prozessluftkreislaufs, in dem mittels eines Prozessluftgebläses (9, 10b) Trocknungsluft (PL) über einen Lufteinlass (6) der Trommel (3) zugeführt, über einen Luftauslass (7) aus dieser abgeführt, in dem Wärmetauscher (15) gekühlt und entfeuchtet und danach durch eine Heizung (16) wieder erwärmt werden kann, und eine Steuereinrichtung (11) zum Steuern des Prozessluftgebläses (9), des Heizkörpers (16) und des Antriebsmotors (10a) der Trommel (3) zur Durchführung eines Trocknungsvorganges,
**dadurch gekennzeichnet,**
**dass** der Wärmetauscher (15) ein Leitungssystem (20) zum Durchleiten von Wasser zum Ableiten von Wärme aus dem Wärmetauscher (15) umfasst.

2. Wäschetrockner (1) nach Anspruch 1,
**dadurch gekennzeichnet,**
**dass** der Heizkörper (16) ein Leitungssystem (21) zum Durchleiten von Wasser und zum Zuführen von Wärme in den Heizkörper (16) umfasst.

3. Wäschetrockner (1) nach Anspruch 1,
**gekennzeichnet durch**
ein Ventilsystem (22), das ein Ventil (22a) in einer Zuführungsleitung (20a) zum Zuführen des kalten Wassers zum Wärmetauscher (15) und ein Ventil (22c) in einer Zuführungsleitung (21 a) zum Zuführen des warmen Wassers zum Heizkörper (16) umfasst.

4. Wäschetrockner (1) nach einem der Ansprüche 1 oder 3,
**gekennzeichnet durch**
einen als Wärmetauscher ausgebildeten Wasserkühler (23) zum Kühlen des zum Wärmetauscher (15) zugeführten Wassers.

5. Wäschetrockner (1) nach Anspruch 4,
**dadurch gekennzeichnet,**
**dass** der Wasserkühler (23) als Bypass zwischen der Zuführungsleitung (20a) zum Wärmetauscher (15) und einer Abführungsleitung (20b) vom Wärmetauscher (15) angeordnet ist, und mittels einer weiteren Ventils (UV1) aktivierbar ist.

6. Wäschetrockner (1) nach Anspruch 4 oder 5,
**gekennzeichnet durch**
ein Kühlluftgebläse (24) zur Wärmeabführung des Wasserkühlers (23).

7. Wäschetrockner (1) nach Anspruch 1 bis 3,
**dadurch gekennzeichnet,**
**dass** im Leitungssystem (20) des Wärmetauschers eine Pumpe (P2) zur Bereitstellung des Wasserdurchflusses durch den Wärmetauscher (15) angeordnet ist.

8. Wäschetrockner (1) nach Anspruch 1 bis 3,
**dadurch gekennzeichnet,**
**dass** im Leitungssystem (21) des Heizkörpers (16) eine Pumpe (P1) zur Bereitstellung des Wasserdurchflusses durch den Heizkörper (16) angeordnet ist

9. Wäschetrockner (1) nach Anspruch 7,
**gekennzeichnet durch**
einen Temperatursensor (T2) im Leitungssystem (20) des Wärmetauschers (15) zur Regelung der Pumpe (P2).

10. Wäschetrockner (1) nach Anspruch 8,
**gekennzeichnet durch**
einen Temperatursensor (T1) im Leitungssystem (21) des Heizkörpers (16) zur Regelung der Pumpe (P1). und einen weiteren Temperatursensor (T2).

11. Wäschetrockner (1) nach Anspruch 4 bis 8,
**gekennzeichnet durch**
ein Hydraulikmodul (17), in dem das Ventilsystem (22), der Wasserkühler (23) und die Pumpen (P1, P2) als Einheit zusammengefasst sind.

12. Wäschetrockner (1) nach einem der Ansprüche 1 bis 9,
**dadurch gekennzeichnet,**
**dass** das Hydraulikmodul (17) oder der Wäschetrockner (1) Anschlüsse (18a, 18b, 19a, 19b) zum Verbinden der Zuführungsleitungen und der Abführungsleitungen an einen Warmwasserspeicher (25) in einer Heizungsinstallation oder Warmwasserinstallation besitzt.

13. Wäschetrockner (1) nach einem der Ansprüche 3 bis 10,
**dadurch gekennzeichnet,**
**dass** die Steuerungseinrichtung (11) des Trockners (1) dazu ausgebildet ist, das Ventilsystem (22), die Ventilvorrichtung (22c) für den Wasserkühler (23), die Pumpen (P1, P2) und/oder das Kühlluftgebläse (24) zu steuern.

14. System, umfassend
- einen Wärmespeicher (25), in dem Wasser erwärmt werden kann, derart, dass sich darin ein Schichtsystem unterschiedlicher Temperaturen ausbildet, wobei das Wasser in einer der oberen Schichten eine höhere Temperatur aufweist, als das Wasser in einer der unteren Schichten, bezogen auf die betriebsgemäße Aufstellposition des Wärmespeicher (25),
- ein Wäschetrockner (1) nach einem der Ansprüche 1 bis 13, wobei das Leitungssystem (20) für den Wärmetauscher (15) an den Wärmespeicher (25) im unteren Bereich angeschlossen ist.

15. System nach Anspruch 14,
**dadurch gekennzeichnet,**
**dass** das Leitungssystem (21) für den Heizkörper (16) an den Wärmespeicher (25) im oberen Bereich angeschlossen ist.

16. System, umfassend
- eine Wärmequelle (25, 28, 27), die zum Erwärmen von Wasser ausgebildet ist,
- eine gegenüber der Wärmequelle separate Kältequelle,
- ein Wäschetrockner (1) nach einem der Ansprüche 1 bis 13, wobei das Leitungssystem (21) für den Heizkörper (16) an die Wärmequelle angeschlossen ist und das Leitungssystem (20) für den Wärmetauscher (15) an die Kältequelle angeschlossen ist.
